Europäisches Patentamt

European Patent Office

Office européen des brevets

(11) Veröffentlichungsnummer: **0 341 339 B1**

(12) **EUROPÄISCHE PATENTSCHRIFT**

(45) Veröffentlichungstag der Patentschrift: **14.10.92**

(51) Int. Cl.⁵: **H04N 5/18**

(21) Anmeldenummer: **88109368.6**

(22) Anmeldetag: **13.06.88**

(54) **Verfahren zur Wiederherstellung des Gleichspannungswertes bei Videosignalen sowie Anordnung.**

(30) Priorität: **09.05.88 EP 88107417**

(43) Veröffentlichungstag der Anmeldung:
**15.11.89 Patentblatt 89/46**

(45) Bekanntmachung des Hinweises auf die
Patenterteilung:
**14.10.92 Patentblatt 92/42**

(84) Benannte Vertragsstaaten:
**AT BE CH DE ES FR GB IT LI NL SE**

(56) Entgegenhaltungen:
**EP-A- 0 087 180**
**DE-B- 2 507 231**
**FR-A- 2 554 661**

(73) Patentinhaber: **ANT Nachrichtentechnik GmbH**
**Gerberstrasse 33**
**W-7150 Backnang(DE)**

(72) Erfinder: **Drinda, Klaus, Dipl.-Ing.**
**Tannenweg 12**
**W-7150 Backnang(DE)**

**Beschreibung**

Die Erfindung betrifft ein Verfahren gemäß dem Oberbegriff des Patentanspruchs 1 sowie eine Anordnung zum Durchführen dieses Verfahrens.

Bei Videosignalen, insbesondere bei über Satelliten übertragenen TV-Signalen, müssen Maßnahmen zur Klemmung und zur Wiederherstellung des Gleichspannungswertes vorgesehen werden (DE-C-36 05 048; Bosch Technische Berichte 7 (1985) 6, Seiten 276-282). Zur Wiedergewinnung dieses Gleichspannungswertes kann eine Signalabtastung in Verbindung mit einer Aufintegration vorgenommen werden. Siehe auch EP-A-0 087 180.

Aufgabe der Erfindung ist es, ein Verfahren zur Wiederherstellung des Gleichspannungswertes anzugeben, bei welchem der Einfluß von Störsignalen möglichst unwirksam bleibt. Außerdem soll eine Anordnung zum Durchführen eines solchen Verfahrens angegeben werden. Diese Aufgabe wird bezüglich des Verfahrens durch die Merkmale des Patentanspruchs 1 und bezüglich der Anordnung durch die Merkmale des Patentanspruchs 3 gelöst. Der Anspruch 2 zeigt eine Weiterbildung des Verfahrens auf und die Patentansprüche 4 und 5 zeigen Weiterbildungen der Anordnung auf.

Die Erfindung geht von folgender Erkenntnis aus: Bei trägerenergieverwischten Videosignalen, entsprechend den Vorschriften der WARC-BS 77 (Rundfunktechnische Mitteilungen, Jahrgang 29 (1985) Heft 5, Seite 238) ergibt sich bei der Wiedergewinnung des Gleichspannungswertes (mittlerer Graupegel) mittels Abtasthalteschaltungen nur ein Störabstand von etwa 44 dB, wohingegen bei der erfindungsgemäßen Wiedergewinnung des Gleichspannungswertes eine Störunterdrückung der Trägerenergieverwischung von mehr als 55 dB erreichbar ist. Außerdem werden niederfrequente Störspannungen, wie z.B. Brummanteile in der Grundfrequenz, um mehr als 40 dB unterdrückt. Während bei der Wiedergewinnung des Gleichspannungswertes mit Abtasthalteschaltungen der während einer Klemmperiode erreichte exakte Referenzwert ermittelt und gehalten wird, erfolgt beim Verfahren nach der Erfindung auch noch eine Nachregelung während der Klemmperiode. Außerhalb der Klemmperiode wird der Anstieg der Einhüllenden der Trägerenergieverwischung weitgehend kompensiert durch die Integration der Spannung am Haltekondensator. Die Einhüllende der Trägerenergieverwischung wird beim Verfahren nach der Erfindung nachgebildet und dem Transkonduktanzverstärker gegenphasig zugeführt. Somit kann die Trägerenergieverwischung geklemmt und fast vollständig kompensiert werden. Eine Regelung der hinteren Schwarzschulter des Videosignals bzw. der Klemmperiode bei D2-MAC auf ein dem Transkonduktanzverstärker angebotenes Gleichspannungsreferenzsignal ist auf einfache Weise möglich. Die Kompensation wird dabei automatisch auf die Amplitude des zu kompensierenden Signals angepaßt.

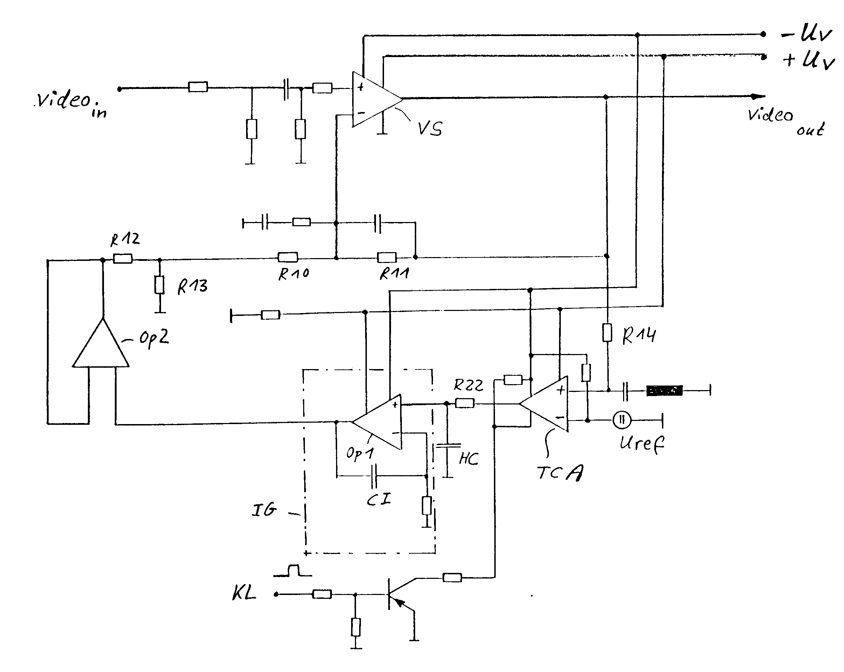

Anhand der Figur, die ein Prinzipschaltbild einer Anordnung zum Durchführen des Verfahrens nach der Erfindung zeigt, wird ein Ausführungsbeispiel der Erfindung näher erläutert.

Das Videosignal, dessen Gleichspannungswert (mittlerer Graupegel) wieder hergestellt werden soll, wird einem Videoverstärker VS am nichtinvertierenden Eingang zugeführt. Diesem Videoverstärker VS wird am invertierenden Eingang ein Regelsignal zur Verstärkungsregelung zugeführt, das aus dem Gegenkopplungssignal für einen Transkonduktanzverstärker TCA abgeleitet wird und mittels dessen der Gleichspannungsmittelwert des Videosignals wiederhergestellt wird. Das Ausgangssignal des Videoverstärkers VS wird dem Transkonduktanzverstärker TCA über den Widerstand R14 am nichtinvertierenden Eingang zugeführt. Ein Saugkreis z.B. am nichtinvertierenden Eingang des Transkonduktanzverstärkers TCA für den Farbhilfsträger (Burst) verringert Verzerrungen des Bursts durch die Klemmung. Der invertierende Eingang dieses Transkonduktanzverstärkers TCA ist mit einem Gleichspannungsreferenzsignal Uref, z.B. einer Gleichspannung von 400 mV, beaufschlagt. Der Transkonduktanzverstärker TCA besteht hier aus einem Operationsverstärker, der eine bipolare Konstantenstromquelle am Ausgang besitzt. Ein solcher Transkonduktanzverstärker liefert einen Konstantstrom am Ausgang, der von der Eingangsspannung, hier der Spannungsdifferenz zwischen Videosignal und Referenzsignal, abhängig ist. Als Transkonduktanzverstärker kann ein handelsüblicher integrierter Baustein, z.B. CA 3080 von RCA, eingesetzt werden. Die Spannung zur Arbeitspunkteinstellung (Bias) des Transkonduktanzverstärkers TCA wird erfindungsgemäß im Takt von Video-Klemmimpulsen KL zwischen Masse und negativer Versorgungsspannung $-U_v$ umgeschaltet. Dadurch wird der Transkonduktanzverstärker TCA für die Zeit, in der keine Klemmimpulse KL auftreten, gesperrt. Der Transkonduktanzverstärker TCA arbeitet somit als Multiplizierer mit hochohmigem Ausgang für das Video-Signal und die Klemmimpulse KL. Zwischen den Ausgang des Transkonduktanzverstärkers TCA und Masse ist ein Haltekondensator HC geschaltet, der durch das Ausgangssignal des Transkonduktanzverstärkers TCA geladen bzw. entladen wird. Ein Widerstand R22 zwischen dem Ausgang des Transkonduktanzverstärkers TCA und dem Haltekondensator HC ist so dimensioniert, daß er zusammen mit dem Haltekondensator HC eine Glättung der Rauschspitzen bei verrauschten Videosignalen bewirkt. Der Widerstand R22 begrenzt die Umladegeschwindigkeit pro Klemmung, so daß die Klemmung nicht so stark auf Rauschimpulse (verursacht durch die FM-Schwelle) anspricht. Dem Haltekondensator HC ist ein Integrator IG mit einer Integrationszeitkonstante von beispielsweise 40 $\mu$s, bestehend aus einem Operationsverstärker Op1 und einem Integrationskondensator CI in seinem Gegenkopplungszweig, nachgeschaltet. Das mittels Integrator IG integrierte Signal wird als Gegenkopplungssignal für den Transkonduktanzverstärker TCA verwendet. In der Signalrückführungsschleife für das Gegenkopplungssignal liegt ein Spannungsteiler, bestehend aus den Widerständen R10 und R11. Vom gemeinsamen Verbindungspunkt der Widerstände R10 und R11 führt eine Verbindungsleitung zum Verstärkungssteuereingang - invertierender Eingang - des dem Transkonduktanzverstärker TCA vorgeschalteten Videoverstärker VS.

Durch diese Maßnahmen ergibt sich für den Videoverstärker VS folgender Regelbetrieb: Wenn der Transkonduktanzverstärker TCA gesperrt ist, d.h. keine Klemmimpulse KL vorhanden sind, ist die Verstärkung des Videoverstärkers VS bestimmt durch die Widerstände R10, R11; die Widerstände R12, R13 und den Ausgangswiderstand des Operationsverstärkers Op2, der sich wie die Widerstände R12 und R13 ebenfalls im Gegenkopplungszweig des Transkonduktanzverstärkers TCA befindet. Beim Auftreten von Klemmimpulsen KL wird der Videoverstärker VS über die integrierte Spannung am Haltekondensator HC so nachgeregelt, daß der Momentanwert seiner Ausgangsspannung dem Gleichspannungsreferenzsignal Uref entspricht.

## Patentansprüche

1.  Verfahren zur Wiederherstellung des Gleichspannungswertes bei Videosignalen, mit folgenden Verfahrensschritten:
    -   Zuführen des Videosignals an den Eingang eines Transkonduktanzverstärkers (TCA), welcher das Videosignal mit einem Referenzsignal vergleicht,
    -   Umschalten der Spannung zur Arbeitspunkteinstellung (Bias) des Transkonduktanzverstärkers (TCA) im Takt von Video-Klemmimpulsen (KL),
    -   Laden/Entladen eines Haltekondensators (HC) durch das Ausgangssignal des Transkonduktanzverstärkers (TCA),
    -   Integrieren des Signals am Haltekondensator (HC),
    -   Verwenden des integrierten Signals als Gegenkopplungssignal für den Transkonduktanzverstärker (TCA).

2.  Verfahren nach Anspruch 1, gekennzeichnet durch
    -   Verwenden des Gegenkopplungssignals als Regelsignal für einen dem Transkonduktanzverstärker (TCA) vorgeschalteten Videoverstärker (VS).

3.  Anordnung zum Durchführen des Verfahrens zur Wiederherstellung des Gleichspannungsanteils bei Videosignalen nach einem der Ansprüche 1 oder 2, bestehend aus
    -   einem Transkonduktanzverstärker (TCA), dessen erster Eingang mit einem Videosignal, dessen zweiter Eingang mit einem Gleichspannungsreferenzsignal und dessen Arbeitspunkteinstellungseingang mit einem Klemmimpuls beaufschlagbar ist,
    -   einem Haltekondensator (HC) am Ausgang des Transkonduktanzverstärkers (TCA),
    -   einem sich an den Haltekondensator (HC) anschließenden Integrator (IG),
    -   einer Signalrückführungsschleife vom Ausgang des Integrators (IG) zum ersten Eingang des Transkonduktanzverstärkers (TCA).

4.  Anordnung nach Anspruch 3, gekennzeichnet durch
    -   einen Spannungsteiler (R10, R11) in der Signalrückführungsschleife,
    -   eine Verbindungsleitung vom Spannungsteiler (R10, R11) zum Verstärkungssteuereingang eines dem Transkonduktanzverstärker (TCA) vorgeschalteten Videoverstärkers (VS).

5.  Anordnung nach Anspruch 3 oder 4, gekennzeichnet durch einen Widerstand (R22) zwischen dem Ausgang des Transkonduktanzverstärkers (TCA) und dem Haltekondensator (HC), der so dimensioniert ist, daß er zusammen mit dem Haltekondensator (HC) die Reaktion der Klemmung auf Rauschspitzen bei verrauschten Videosignalen verringert.

## Claims

1.  Method for the restoration of the direct voltage values in video signals by the following method steps:
    -   feeding the video signal to the input of a transconductance amplifier (TCA), which compares the video signal with a reference signal,
    -   switching-over of the voltage for the working point setting (bias) of the transconductance amplifier (TCA) in synchronism with video clamping pulses (KL),
    -   charging or discharging of a holding capacitor (HC) by the output signal of the transconductance amplifier (TCA),
- integrating the signal at the holding capacitor (HC) and
- using the integrated signal as negative feedback signal for the transconductance amplifier (TCA).

2. Method according to claim 1, characterised by
- use of the negative feedback signal as regulating signal for a video-amplifier (VS) connected in front of the transconductance amplifier (TCA).

3. Arrangement for the performance of the method for the restoration of the direct voltage values in video signals according to one of the claims 1 and 2 and consisting of
- a transconductance amplifier (TCA), the first input of which is actable on by a video signal, the second input of which is actuable on by a direct voltage reference signal and the working point setting input of which is actuable on by a clamping pulse,
- a holding capacitor (HC) at the output of the transconductance amplifier (TCA),
- an integrator (IG) following the holding capacitor (HC) and
- a signal feedback loop from the output of the integrator (IG) to the first input of the transconductance amplifier (TCA).

4. Arrangement according to claim 3, characterised by
- a voltage divider (R10, R11) in the signal feedback loop and
- a connecting line from the voltage divider (R10, R11) to the amplification control input of a video-amplifier (VS) connected in front of the transconductance amplifier (TCA).

5. Arrangement according to claim 3 or 4, characterised by a resistor (R22), which is between the output of the transconductance amplifier (TCA) and the holding capacitor (HC) and which is so dimensioned that together with the holding capacitor (HC) it reduces the reaction of the clamping to noise peaks in noisy video signals.

**Revendications**

1. Procédé de régénération de la valeur de tension continue dans les signaux vidéo, comportant les étapes suivantes :
- application du signal vidéo à l'entrée d'un amplificateur à transconductance (TCA) qui compare le signal vidéo à un signal de référence;
- commutation de la tension pour le réglage du point de travail (Bias) de l'amplificateur à transconductance (TCA) au rythme d'impulsions de blocage vidéo (KL);
- charge/décharge d'un condensateur de maintien (HC) par le signal de sortie de l'amplificateur à transconductance (TCA);
- intégration du signal au condensateur de maintien (HC);
- utilisation du signal intégré en tant que signal de contre-réaction pour l'amplificateur à transconductance (TCA).

2. Procédé selon revendication 1, caractérisé par l'utilisation du signal de contre-réaction en tant que signal de régulation pour un amplificateur vidéo (VS) en amont de l'amplificateur à transconductance (TCA).

3. Dispositif de mise en oeuvre du procédé de restitution de la valeur de tension continue dans les signaux vidéo selon l'une des revendications 1 ou 2, constitué par
- un amplificateur à transconductance (TCA) dont la première entrée est attaquée par un signal vidéo, sa deuxième entrée étant attaquée par un signal de référence de tension continue, tandis que son entrée de réglage du point de travail est attaquée par une impulsion de blocage;
- par un condensateur de maintien (HC) à la sortie de l'amplificateur à transconductance (TCA);
- par un intégrateur (IG) succédant au condensateur de maintien (HC); et
- par une boucle de rétrocouplage de signal, de la sortie de l'intégrateur (IG) à la première entrée de l'amplificateur à transconductance (TCA).

4. Dispositif selon revendication 3, caractérisé par
- un diviseur de tension (R10, R11) dans la boucle de rétrocouplage de signal;
- une ligne de liaison allant du diviseur de tension (R10, R11) à l'entrée de commande d'amplification d'un amplificateur vidéo (VS) monté en amont de l'amplificateur à transconductance (TCA).

5. Dispositif selon revendication 3 ou 4, caractérisé par une résistance (R22) entre la sortie de l'amplificateur à transconductance (TCA) et le condensateur de maintien (HC), cette résistance étant dimensionnée de manière à réaliser, en combinaison avec le condensateur de maintien (HC), la réduction de la réaction du blocage aux pointes de bruit dans des signaux vidéo chargés de bruit.

video in

VS

video out

− Uv

+ Uv

R12

R13

Op2

R10

R11

R14

R22

Op1

HC

CI

IG

TCA

Uref

KL

EP 0 341 339 B1